# EUROPÄISCHE PATENTSCHRIFT

(11) **EP 1 263 691 B1**
(45) Veröffentlichungstag und Bekanntmachung des Hinweises auf die Patenterteilung: **15.12.2004**
(21) Anmeldenummer: 01915010.1
(22) Anmeldetag: 15.02.2001
(51) Int. Cl.: C04B 35/465, C04B 41/50, H01G 4/12

(54) **KERAMIKMASSE, VERFAHREN ZUR HERSTELLUNG DER KERAMIKMASSE UND VERWENDUNG DER KERAMIKMASSE**
CERAMIC MASS, METHOD FOR THE PRODUCTION OF A CERAMIC MASS AND USE OF A CERAMIC MASS
MASSE CERAMIQUE, PROCEDE DE PRODUCTION DE LA MASSE CERAMIQUE ET UTILISATION DE LA MASSE CERAMIQUE

(30) Priorität: 13.03.2000 DE 10012103
(43) Veröffentlichungstag der Anmeldung: 11.12.2002
(73) Patentinhaber: SIEMENS AKTIENGESELLSCHAFT, 80333 München (DE)
(72) Erfinder: PREU, Gabriele, 81667 München (DE); GOHLKE, Silvia, 81543 München (DE); MÄNNER, Ruth, 85667 Oberpframmern (DE); WERSING, Wolfram, 83346 Bergen (DE)
(86) Internationale Anmeldenummer: PCT/DE2001/000581
(87) Internationale Veröffentlichungsnummer: WO 2001/068554

(56) Entgegenhaltungen:
- WO-A-97/44797
- DE-A- 19 937 999
- DE-C- 4 406 812
- US-A- 5 310 422

## Beschreibung

Die Erfindung betrifft eine LTCC-Keramikmasse mit einem Keramikmaterial, zumindest einem vom Keramikmaterial verschiedenen weiteren Keramikmaterial und zumindest ein zwischen den Keramikmaterialien angeordnetes Glasmaterial. Neben der Keramikmasse wird ein Verfahren zur Herstellung der LTCC-Keramikmasse und eine Verwendung der LTCC-Keramikmasse angegeben.

Aus der DE 199 37 999 A1 ist eine Keramikmasse bekannt, die als Dielektrikum eines Mehrschichtkondensators eingesetzt wird. Die Keramikmasse beinhaltet neben dem Keramikmaterial Barium-Calcium-Titanat weitere oxidische Zusätze auf. Die Keramikmasse weist eine Temperaturabhängigkeit der Permittivität mit XR7-Charakteristik auf. Eine Sintertemperatur der Keramikmaterial liegt bei über 1200°C.

Aus der WO 97/44797 ist eine Keramikmasse bekannt, die Bestandteil eines Mehrschichtkondensators in Dünnschichtbauweise ist. Der Mehrschichtkondensator besteht aus alternierenden Elektrodenschichten und Keramikschichten. Die Keramikschichten bestehen aus unterschiedlichem Keramikmaterial. Gemeinsame Basis der Keramikmaterialien ist beispielsweise ein Barium-Strontium-Titanat-System. Von Keramikmaterial zu Keramikmaterial ändert sich eine stöchiometrische Zusammensetzung des Barium-Strontium-Titanats. Jede Keramikschicht weist für sich eine eigene, relativ starke Temperaturabhängigkeit der relativen Permittivität auf. Die gesamte Keramikmasse des Mehrschichtkondensators zeigt dagegen eine über die Temperaturabhängigkeiten der einzelnen Keramikmaterialien gemittelte, relativ niedrige Temperaturabhängigkeit der Permittivität. Auf diese Weise ist beispielsweise ein Temperaturgang der Keramikmasse mit X7R-Charakteristik realisiert.

Um diese Charakteristik des Temperaturgangs der Keramikmasse beziehungsweise des Mehrschichtkondensators zu erhalten, wird ein laminierter Stapel aus Elektrodenschichten und keramischen Grünfolien mit unterschiedlichem Keramikmaterial gesintert. Aus jeder Grünfolie wird beim Sintern eine Keramikschicht. Eine Kontaktfläche zwischen zwei benachbarten Grünfolien beziehungsweise zwischen zwei benachbarten Keramikschichten ist im Vergleich zum Volumen der Grünfolien beziehungsweise der Keramikschichten relativ gering. Da näherungsweise nur im Kontaktbereich eine Interdiffusion einzelner Elemente zwischen den Keramikschichten stattfindet, kommt es nur im Bereich der Kontaktflächen zu einer Änderung der stöchiometrischen Zusammensetzung der Keramikmaterialien. Nur hier kommt es zu einer Mischkristallbildung. Die stöchiometrische Zusammensetzung der Keramikmaterialien der Keramikschichten bleibt im wesentlichen erhalten., Die Charakteristik des Temperaturgangs der Keramikmasse lässt sich somit durch die Auswahl der Keramikmaterialien weitgehend festlegen.

Eine beim Sintern des laminierten Stapels verwendete Sintertemperatur ist relativ hoch. Deshalb muss zum Herstellen des Mehrschichtkondensators für die Elektrodenschichten ein Elektrodenmaterial mit einer relativ hohen Schmelztemperatur verwendet werden. Ein derartiges Material ist beispielsweise Platin.

Ein Verfahren, mit dessen Hilfe die Sintertemperatur erniedrigt werden kann, so daß auch ein niedrig schmelzendes Metall mit einer hohen elektrischen Leitfähigkeit wie Silber oder Kupfer einem Sinterprozeß zugeführt werden kann, stützt sich auf die LTCC (Low Temperature Cofired Ceramic)-Technologie (siehe zum Beispiel D. L. Wilcox et al., Proceedings 1997, ISHM, Philadelphia, Seite 17-23). Als Keramikmasse wird dabei niedrig sinternde Glaskeramik eingesetzt. Glaskeramik besteht aus einem Keramikmaterial und einem Glasmaterial.

Aus der DE 44 06 812 Cl ist eine LTCC-Keramikmasse mit einer Sintertemperatur von 900 °C bekannt. Die Keramikmasse zeichnet sich durch eine Permittivität von über 200 mit X7R-Charakteristik aus. Um die niedrige Sintertemperatur und gleichzeitig die hohe Permittivität zu erhalten, ist ein Bleianteil an der Keramikmasse relativ hoch.

Aus der US 5 310 422 ist eine Mischung verschiedener Keramikmaterialien bekannt. Die Mischung wird als Farbe eingesetzt.

Aufgabe der vorliegenden Erfindung ist es eine LTCC-Keramikmasse anzugeben, die eine möglichst niedrige Sintertemperatur und eine bestimmte Permittivität aufweist.

Zur Lösung der Aufgabe wird eine LTCC-Keramikmasse mit einem Keramikmaterial, zumindest einem vom Keramikmaterial verschiedenen weiteren Keramikmaterial und zumindest ein zwischen den Keramikmaterialien angeordnetes Glasmaterial angegeben, dadurch gekennzeichnet, dass die LTCC-Keramikmasse eine Sintertemperatur von unter 950°C aufweist und Blei zu einem Anteil von unter 0,1 Gewichtsprozent vorhanden ist.

Die Keramikmasse kann eine gesinterte Keramik, ein Grünkörper oder ein lose Schüttung der Keramikmaterialien aus einzelnen Keramikpartikeln sein. Die Keramikmasse weist mindestens zwei verschiedene Keramikmaterialien auf. Denkbar sind insbesondere auch mehr als zwei verschiedene Keramikmaterialien. Das Glasmaterial ist zum Beispiel ein Borsilikatglas, das mit Erdalkalioxiden versetzt ist. Allgemein kommt jedes Glasmaterial in Betracht, das aus der LTCC-Technologie bekannt ist. Insbesondere ist auch eine Mischung verschiedener Glasmaterialien denkbar. Insbesondere kommt als Glasmaterial auch ein Ausgangsmaterial (Precursor) eines Glases in Betracht. Dieses Ausgangsmaterial ist beispielsweise ein Alkali- oder Erdalkalialkoholat. Aus dem Ausgangsmaterial wird das Glas gebildet.

Der grundlegende Gedanke der Erfindung besteht darin, mit Hilfe des zwischen den Keramikmaterialien angeordneten Glasmaterials die Kontaktfläche zwischen den verschiedenen Keramikmaterialien zu verkleinern. Dadurch wird die Interdiffusion einzelner Elemente zwischen den verschiedenen Keramikmaterialien erniedrigt. Die Keramikmasse kann einem Sinterprozess unterzogen werden, wobei es zu einer verringerten Mischkristallbildung kommt. Die stöchiometrische Zusammensetzung der Keramikmaterialien bleibt weitgehend erhalten. Besonders vorteilhaft ist es dabei, wenn zwischen den Keramikmaterialien nahezu keine Kontaktfläche vorhanden ist. Die Keramikmaterialien sind voneinander getrennt. Die Mischkristallbildung wird im wesentlichen unterdrückt. Dadurch ist auch die Permittivität der Keramikmasse unabhängig von einem Verhältnis des Volumens des Keramikmaterials zu seinen Kontaktflächen zu benachbarten Keramikmaterialien. Der Temperaturgang der Permittivität der Keramikmasse kann durch die verwendeten Keramikmaterialien leicht und reproduzierbar eingestellt werden.

In einer besonderen Ausgestaltung weist zumindest eine der Keramikmaterialien ein Keramikpulver mit einer Pulveroberfläche auf, an der das Glasmaterial angeordnet ist. Das Keramikpulver ist eine Form einer Zerteilung des Keramikmaterials. Die Zerteilung wird beispielsweise durch Mahlen mit einer Mühle erhalten wird. Das Keramikpulver besteht aus einzelnen Pulverpartikeln (Körnern) und zeichnet sich durch eine Pulvermorphologie aus. Die Pulvermorphologie ist durch eine Form und Größe der Pulverpartikel gegeben. Die Form ist beispielsweise rund oder kantig. Die Größe ergibt sich durch einen Durchmesser eines Pulverpartikels. Der Durchmesser kann einen Betrag von 10 nm bis einigen µm aufweisen. Die Pulveroberfläche ist eine Oberfläche der einzelnen Pulverpartikel. Der Vorteil des Keramikpulvers besteht darin, dass ein homogenes Gemenge der Keramikmaterialien zugänglich ist und damit ein homogener Temperaturgang der Keramikmasse eingestellt werden kann. Die Temperaturabhängigkeit der Permittivität ist über die gesamte Keramikmasse weitgehend gleich. Es kommt zu keinem lokalen Unterschied der Temperaturabhängigkeit. Dies ist insbesondere dann möglich, wenn nicht nur ein Keramikmaterial, sondern alle verwendeten Keramikmaterialien als Keramikpulver in der Keramikmasse vorliegen.

Um zu verhindern, dass Pulverpartikel aus unterschiedlichem Keramikmaterial aneinander grenzen, kann die Keramikmasse ein mehr oder weniger loses Gemenge der Pulverpartikel und des Glasmaterial in Form von Glaspartikeln sein. Dabei ist der Anteil des Glasmaterials so groß, dass eine Wahrscheinlichkeit dafür, dass Pulverpartikel der Keramikmaterialien einander berühren, möglichst klein ist.

In einer besonderen Ausgestaltung ist das Glasmaterial eine homogene Beschichtung der Pulveroberfläche. Durch die homogene Beschichtung ist eine effektive Trennung von Pulverpartikeln aus unterschiedlichem Keramikmaterial möglich. Die homogene Beschichtung kann eine einzige, zusammenhängende Beschichtung sein. Die Pulveroberfläche ist dabei komplett von der Beschichtung belegt. Möglich ist auch, dass mehrere, voneinander getrennte Teilbeschichtungen vorhanden sind. Es kann eine freie Pulveroberfläche vorhanden sein, die nicht von der Beschichtung belegt. Die freie Pulveroberfläche ist so dimensioniert, dass ein Kontakt von Pulverpartikeln aus unterschiedlichem Keramikmaterial weitgehend ausgeschossen ist. Denkbar ist darüber hinaus, dass die Beschichtung durch an der Oberfläche eines Pulverpartikels aneinander grenzende und mit der Pulveroberfläche fest verbundene Glaspartikel mit kleinerem Durchmesser als der Durchmesser des Pulverpartikels gebildet ist.

Mit zunehmendem Anteil des Glasmaterials an der Keramikmasse erniedrigt sich die Sintertemperatur. Um aber eine möglichst hohe Permittivität zu erhalten, wie sie beispielsweise bei einem Kondensator notwendig sein kann, sollte der Anteil des Glasmaterials möglichst niedrig sein. Dieses Problem lässt sich durch die homogene Beschichtung und deren effektive Trennung der Keramikmaterialien lösen. Durch die homogene Beschichtung kann der Anteil des Glasmaterials bei hoher Trennwirkung niedrig gehalten werden. Somit können Sintertemperatur und Permittivität der Keramikmasse weitgehend unabhängig voneinander eingestellt werden.

In einer besonderen Ausgestaltung weisen das Keramikmaterial und das weitere Keramikmaterial zumindest ein gleiches chemisches Element auf, wobei ein Anteil des Elements am Keramikmaterial und ein Anteil des Elements am weiteren Keramikmaterial unterschiedlich sind. Beispielsweise basieren die Keramikmaterialien auf einem gemeinsamen keramischen Basissystem. Von Keramikmaterial zu Keramikmaterial ändert sich deren stöchiometrische Zusammensetzung. Ein derartiges keramisches Basissystem ist beispielsweise Barium-Strontium-Titanat (Ba₁-ᵤSrᵤTiO₃, BST) oder Barium-Zirkonium-Titanat (BaZrₓTi₁₋ₓO₃, BZT). Denkbar ist aber auch, dass die Keramikmaterialien zu unterschiedlichen Basissystemen gehören.

Insbesondere weist die Keramikmasse eine Temperaturabhängigkeit einer relativen Permittivität auf, die in einem bestimmten Temperaturbereich kleiner ist als eine Temperaturabhängigkeit einer relativen Permittivität einer der Keramikmaterialien in dem Temperaturbereich. Dadurch, dass unterschiedliche Keramikmaterialien verwendet werden, kann der Temperaturgang eingestellt werden. Beispielsweise kann eine X7R- oder mindestens eine Z5U-Charakteristik eingestellt sein. Entscheidend ist, dass durch das Glasmaterial während des Sinterns die Mischkristallbildung durch Interdiffusion zwischen den Keramikmaterialien unterbunden ist.

In einer besonderen Ausgestaltung weisen das Keramikmaterial und/oder das weitere Keramikmaterial zumindest einen Stoff auf, der aus der Gruppe Ba₁₋ᵤSrᵤTiO₃ und/oder BaZrₓTi₁₋ₓO₃ mit u und x aus einem Bereich von einschließlich null bis einschließlich eins ausgewählt ist. Beispielsweise weist die Keramikmasse sieben Keramikmaterialien mit den stöchiometrischen Zusammensetzungen Ba_{0,4}Sr_{0,6}TiO₃, Ba_{0,5}Sr_{0,5}TiO₃, Ba_{0,6}Sr_{0,4}TiO₃, Ba_{0,7}Sr_{0,3}TiO₃, Ba_{0,8}Sr_{0,2}TiO₃, Ba_{0,9}Sr_{0,1}TiO₃ und Ba-TiO₃ auf.

Blei ist zu einem Anteil von unter 0,1 Gewichtsprozent, und insbesondere unter 0,001 Gewichtsprozent vorhanden. Mit Hilfe der Basissysteme Barium-Strontium-Titanat und/oder Barium-Zirkonium-Titanat und dem Glasmaterial ist eine niedrigsinternde Keramikmasse als Alternative zu einem Relaxorsystem wie Blei-Magnesium-Niobat (PMN) zugänglich.

Neben der beschriebenen Keramikmasse wird zur Lösung der Aufgabe ein Verfahren zur Herstellung der Keramikmasse angegeben. Dabei wird an einer Oberfläche zumindest einer der Keramikmaterialien eine Beschichtung mit dem Glasmaterial erzeugt. In einer bevorzugten Ausgestaltung wird dabei ein Keramikpulver des Keramikmaterials und als Oberfläche die Pulveroberfläche des Keramikpulvers verwendet.

Insbesondere werden folgende Verfahrensschritte durchgeführt: a) Erzeugen eines Gemenges aus zumindest einem der Keramikmaterialien und dem Glasmaterial und b) Mahlen des Gemenges.

Durch das Mahlen wird das Gemenge aus Keramikmaterial und Glasmaterial homogenisiert. Die Partikeloberflächen des Keramikmaterials werden mit dem Glasmaterial bedeckt. Das Glasmaterial bildet somit die Beschichtung der Partikeloberflächen. Denkbar ist, dass nur eines der Keramikmaterialien auf diese Weise behandelt wird und nachfolgend mit dem weiteren Keramikmaterial vermengt wird. Möglich ist auch, dass jeweils ein Keramikmaterial mit dem Glasmaterial zusammen gemahlen wird oder auch beide Keramikmaterialien gleichzeitig mit dem Glasmaterial gemahlen werden. Durch die Beschichtung wird die Wahrscheinlichkeit für das Auftreten eines Korn-Korn-Kontakts zwischen Keramikpartikeln unterschiedlichen Keramikmaterials verringert.

Für eine wirkungsvolle Beschichtung der Keramikmaterialien und/oder der Pulveroberflächen ist es vorteilhaft, wenn ein Glasmaterial verwendet wird, das aus Glaspartikeln besteht, die einen kleineren Durchmesser aufweisen als die verwendeten Keramikpartikel. Insbesondere wird dazu ein Glasmaterial mit nanometerskaligen Glaspartikeln verwendet. Der Durchmesser eines Glaspartikels kann einen Betrag aufweisen, der aus dem Bereich von einschließlich 10 nm bis einschließlich 1 µm ausgewählt ist.

In einer besonderen Ausgestaltung wird eine Lösungsbeschichtung der Oberfläche der Keramikmaterialien durchgeführt. Insbesondere wird bei der Lösungsbeschichtung ein Sol-Gel-Verfahren durchgeführt. Andere Verfahren wie zum Beispiel ein Emulsionsverfahren sind ebenfalls denkbar. Bei der Lösungsbeschichtung wird vorzugsweise ein Ausgangsmaterial eines Glases auf die Oberfläche aufgebracht. Es entsteht eine Beschichtung aus dem Ausgangsmaterial.

Gemäß einem weiteren Aspekt der Erfindung wird die zuvor beschriebene Keramikmasse zum Herstellen eines keramischen Grünkörpers verwendet. Der keramische Grünkörper zeichnet sich dadurch aus, dass die Keramikmasse durch Sintern noch verdichtet werden kann. Der Grünkörper kann eine Grünfolie mit der Keramikmasse und einem organischen Binder oder einem wässrigen Dispersionsbinder sein. Ebenfalls kann der Grünkörper nur aus der gepressten Keramikmasse bestehen. Eine lose Schüttung ist auch denkbar, die sich in einer eine Form gebenden Hülle befindet. Möglich ist auch, dass die Keramikmasse als keramische Siebdruckpaste zum Herstellen des Grünkörpers verwendet wird. Vorstellbar ist darüber hinaus, dass die Keramikmasse als gesinterter Keramikkörper vorliegt und als solcher einem weiteren Sinterprozess zugeführt wird.

Der Grünkörper mit der Keramikmasse wird beispielsweise zum Herstellen eines Kondensators benutzt. Ein derartiger Kondensator ist beispielsweise ein Mehrschichtkondensator. Dazu werden beispielsweise mit Hilfe der Keramikmasse keramische Grünfolien hergestellt, die mit Elektrodenschichten bedruckt, übereinander zu einem Stapel angeordnet, laminiert, entbindert und gesintert werden. Jede der Grünfolien weist vorzugsweise die gleiche Keramikmasse auf. Denkbar ist aber auch, dass die Keramikmasse von Grünfolie zu Grünfolie unterschied-lich ist.

Der Kondensator kann auch ein Entkopplungskondensator sein. Dazu wird beispielsweise aus der Keramikmasse eine Siebdruckpaste erzeugt, mit deren Hilfe eine dielektrische Schicht des Entkopplungskondensators durch ein Siebdruckverfahren hergestellt wird. Der Entkopplungskondensator kann dabei leicht in einem mehrschichtigen Keramiksubstrat integriert werden und muss nicht auf einer Oberfläche des Keramiksubstrats angebracht werden. Der Kondensator kann lokal, beispielsweise un-mittelbar an einem abzublockenden IC-Anschluss, im Keramiksubstrat integriert sein. Insbesondere eignet sich die Keramikmasse zur Integration von Entkopplungskondensatoren in Keramiksubstraten, die mit Hilfe der LTCC-Technologie hergestellt werden. Das Keramiksubstrat weist beispielsweise eine kompakte Leitungsstruktur (Stripline, Triplate) mit hoher Güte für einen Resonator, einen Koppler und/oder einen Bandpassfilter auf. Dazu werden in der LTCC-Technologie niedrig schmelzende Metalle wie Silber oder Kupfer mit einer hohen elektrischen Leitfähigkeit verwendet. Mit Hilfe der Keramikmasse können in diesen Keramiksubstraten, die bei einer Sintertemperatur von unter 950°C gesintert sind, Entkopplungskondensatoren mit einen Kapazitätswert von einschließlich 30 pF bis einschließlich 3 nF integriert sein.

Zusammengefasst ergeben sich mit der Erfindung folgende Vorteile:
- Durch das Glasmaterial sind die verschiedenen Keramikmaterialien der Keramikmasse voneinander getrennt. Beim Sintern der Keramikmasse kommt es zu keiner Mischkristallbildung. Unterschiedlich zusammengesetzte Keramikmaterialien bleiben erhalten. Es ist eine dichte Keramik zugänglich ohne Eigenschaftsveränderung der einzelnen Keramikmaterialien. Auf diese Weise ist beispielsweise eine relativ hohe Permittivität der Keramikmasse bei geringem Temperaturgang zugänglich.
- Insbesondere mit Hilfe einer homogenen Beschichtung der Pulveroberflächen der Keramikmaterialien können die Sintertemperatur und die Permittivität beziehungsweise der Temperaturgang der Permittivität der Keramikmasse leicht eingestellt werden. Es sind Keramikmassen mit einer Sintertemperatur von unter 950°C zugänglich, die als dielektrisches Material für Entkopplungskondensatoren mit einer Kapazität von 30 pF bis einschließlich 3 nF verwendet werden können.
- Die Keramikmasse ist für die LTCC-Technologie geeignet. Dadurch können kompakte Leitungsstrukturen hoher Güte hergestellt werden.

Anhand mehrerer Ausführungsbeispiele und der dazugehörigen Figuren wird im folgenden die Keramikmasse, das Verfahren zur Herstellung der Keramikmasse und die Verwendung der Keramikmasse vorgestellt. Die Figuren sind schematisch und stellen keine maßstabsgetreuen Abbildungen dar.
Figuren 1a bis ld zeigen jeweils eine Keramikmasse.
Figuren 2a und 2b zeigen einen Keramikpartikel, dessen Oberfläche eine homogene Beschichtung aus einem Glasmaterial aufweist.
Figur 3 zeigt einen keramischen Grünkörper.
Figuren 4a und 4b zeigen ein Verfahren zum Herstellen der Keramikmasse.

Die Keramikmasse 1 weist ein Keramikmaterial 2 und weitere Keramikmaterialien 3 auf. Zwischen den Keramikmaterialien 2 und 3 ist Glasmaterial 4 angeordnet. Das Glasmaterial 4 ist ein mit Erdalkalioxiden versetztes Borsilikatglas.

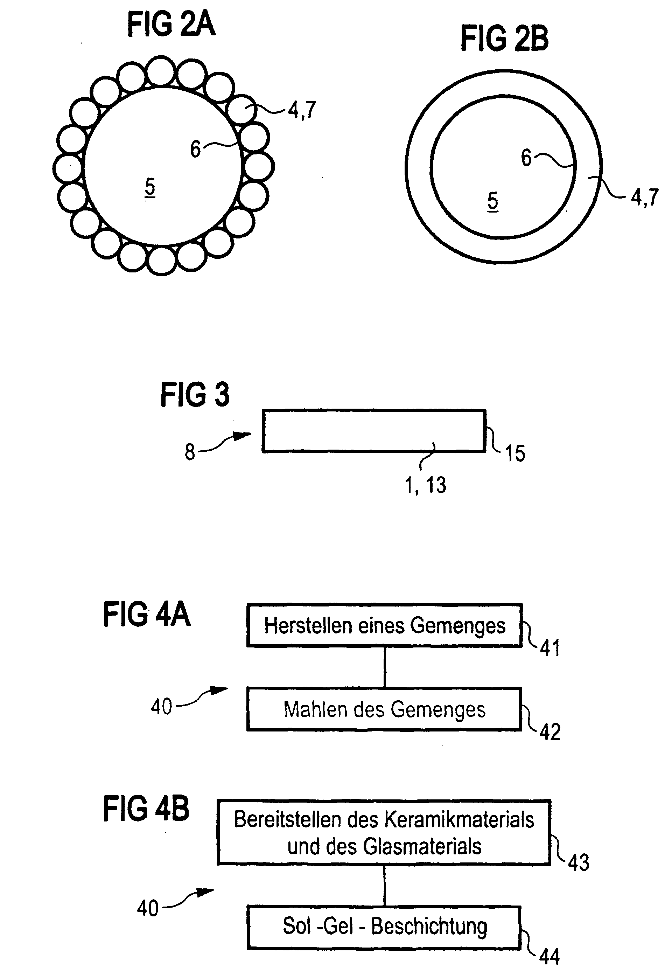

Gemäß einer ersten Ausführungsform ist die Keramikmasse 1 eine Pulvermischung 12 (Figur la). Dabei liegt die Keramikmasse 1 als Gemenge von Keramikpulvern 5 aus den unterschiedlichen Keramikmaterialien 2 und 3 vor. Die Keramikpulver 5 bestehen aus Keramikpartikeln 10 mit einem durchschnittlichen Durchmesser von 100 nm. Zum Anordnen des Glasmaterials 4 zwischen den Keramikmaterialien 2 und 3 ist das Glasmaterial 4 an den Pulveroberflächen 6 der Keramikmaterialien 2 und 3 als homogene Beschichtung 7 angeordnet (Figuren 2a und 2b). Die Beschichtung 7 aus dem Glasmaterial 4 verkleinert die Kontaktfläche zwischen den Pulverpartikeln 5 der verschiedenen Keramikmaterialien 2 und 3.

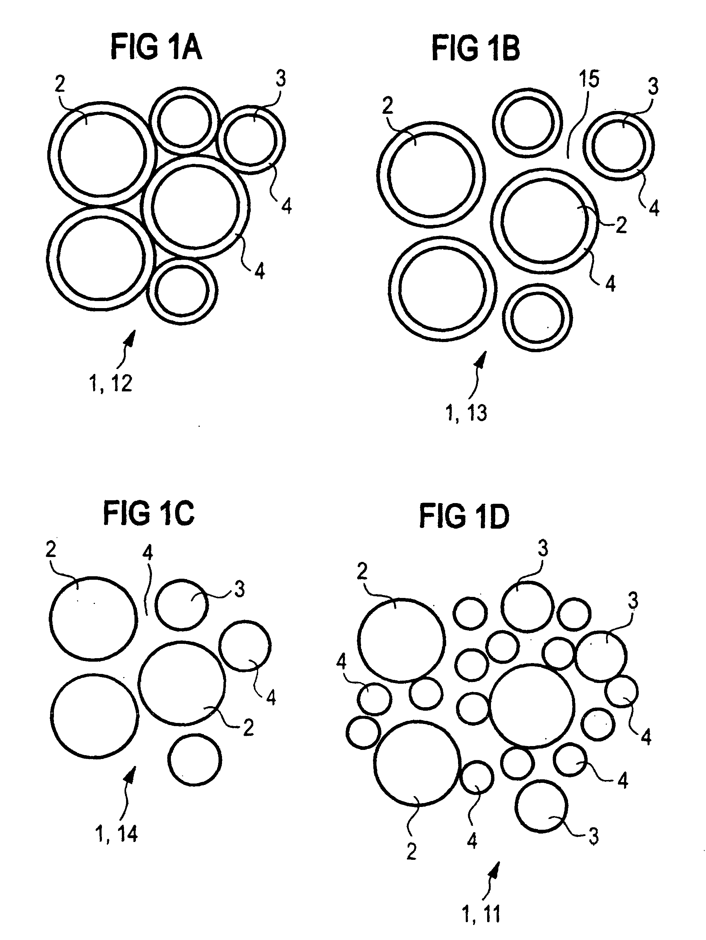

Zum Herstellen der Pulvermischung 12 der Keramikmasse 1 wird an der Pulveroberfläche 6 der Keramikmaterialien 2 und 3 die Beschichtung 7 erzeugt. Dazu wird ein Glasmaterial 4 mit Glaspartikel 9 verwendet, die einen durchschnittlichen Durchmesser von 10 nm aufweisen. In einem ersten Verfahrensschritt 41 (Figur 4a) wird ein Gemenge 11 (Figur 1d) aus den Keramikmaterialien 2 und 3 und dem Glasmaterial 4 erzeugt. Im einem weiteren Verfahrensschritt 42 wird dieses Gemenge 11 in einer Mühle gemahlen, wobei sich die Beschichtung 7 ausbildet. Als Alternative zum beschriebenen Verfahren werden die Keramikpulver 5 und das Glasmaterial 4 bereitgestellt (Verfahrensschritt 43), um in einem Sol-Gel-Verfahren 44 die Beschichtung 7 herzustellen (Figur 4b).

Gemäß einer zweiten Ausführungsform ist die Keramikmasse 1 Bestandteil eines keramischen Grünkörpers 8 (Figuren 1b und 3). Der Grünkörper 8 ist eine keramische Grünfolie und weist einen organischen Binder 15 auf. Zum Herstellen der Grünfolie 8 wird die Keramikmasse 1 in Form des Gemenges 11, insbesondere aber in Form der Pulvermischung 12 verwendet. Die Grünfolie 8 wird zur Herstellung eines keramischen Mehrschichtkondensators mit einer der unten beschriebenen Charakteristiken des Temperaturgangs verwendet.

Gemäß einer weiteren Ausführungsform ist die Keramikmasse 1 eine bereits gesinterte Keramik 14 (Figur 1c). Zwischen den Keramikpartikeln 5 der verschiedenen Keramikmaterialien 2 und 3 ist das Glasmaterial 4 angeordnet. Die Keramikmaterialien 2 und 3 liegen in einer Matrix aus dem Glasmaterial 4 vor.

### Beispiel 1:

Die Keramikmaterialien 2 und 3 basieren auf dem Barium-Strontium-Titanat-System. Der Anteil der Elemente variiert von Keramikmaterial zu Keramikmaterial. Die Keramikmaterialien 2 und 3 weisen folgende stöchiometrische Zusammensetzungen auf: Ba_{0,4}Sr_{0,6}TiO₃, Ba_{0,5}Sr_{0,5}TiO₃. Ba_{0,6}Sr_{0,4}TiO₃, Ba_{0,7}Sr_{0,3}TiO₃, Ba_{0,8}Sr_{0,2}TiO₃, Ba_{0,9}Sr_{0,1}TiO₃ und BaTiO₃. Die Keramikmasse 1 zeigt im Temperaturbereich -50°C bis 150°C eine konstante relative Permittivität Er von etwa 12000 bis 17000. Realisiert ist auf diese Weise die X7R-Charakteristik des Temperaturgangs. Die Temperaturabhängigkeit der relativen Permittivität ist deutlich kleiner als die Temperaturabhängigkeit der relativen Permittivität der einzelnen Keramikmaterialien.

### Beispiel 2:

Mit Hilfe des Barium-Zirkonium-Titanat-Systems ist die Z5U-Charakteristik realisiert. Die Keramikmaterialien 2 und 3 weisen folgende stöchiometrische Zusammensetzungen auf: BaZr_{0,25}Ti_{0,75}O₃, BaZr_{0,2}Ti_{0,8}O₃, BaZr_{0,13}Ti_{0,87}O₃, BaZr_{0,6}Ti_{0,94}O₃, BaZr_{0,04}Ti_{0,96}O₃ und BaTiO₃.

## Patentansprüche

1. LTCC-Keramikmasse (1, 11, 12, 13, 14) mit
- einem Keramikmaterial (2),
- zumindest einem vom Keramikmaterial (2) verschiedenen weiteren Keramikmaterial (3) und
- zumindest ein zwischen den Keramikmaterialien (2, 3) angeordnetes Glasmaterial (4)
**dadurch gekennzeichnet, daß**
- die LTCC-Keramikmasse eine Sintertemperatur von unter 950°C aufweist und
- Blei zu einem Anteil von unter 0,1 Gewichtsprozent vorhanden ist.

2. LTCC-Keramikmasse nach Anspruch 1, wobei zumindest eine der Keramikmaterialien (2, 3) ein Keramikpulver (5) mit einer Pulveroberfläche (6) aufweist, an der das Glasmaterial (4) angeordnet ist.

3. LTCC-Keramikmasse nach Anspruch 2, wobei das Glasmaterial (4) eine homogene Beschichtung (7) der Pulveroberfläche (6) ist.

4. LTCC-Keramikmasse nach einem der Ansprüche 1 bis 3, wobei das Keramikmaterial (2) und das weitere Keramikmaterial (3) zumindest ein gleiches chemisches Element aufweisen und ein Anteil des Elements am Keramikmaterial (2) und ein Anteil des Elements am weiteren Keramikmaterial (3) unterschiedlich sind.

5. LTCC-Keramikmasse nach einem der Ansprüche 1 bis 4, wobei die LTCC-Keramikmasse (1, 11, 12, 13, 14) eine Temperaturabhängigkeit einer relativen Permittivität aufweist, die in einem bestimmten Temperaturbereich kleiner ist als eine Temperaturabhängigkeit einer relativen Permittivität einer der Keramikmaterialien (2, 3) in dem Temperaturbereich.

6. LTCC-Keramikmasse nach einem der Ansprüche 1 bis 5, wobei das Keramikmaterial (2) und/oder das weitere Keramikmaterial (3) zumindest einen Stoff aufweist, der aus der Gruppe Ba₁₋ᵤSrᵤTiO₃ und/oder BaZrₓTi₁₋ₓO₃ mit u und x aus einem Bereich von einschließlich null bis einschließlich eins ausgewählt ist.

7. LTCC-Keramikmasse nach einem der Ansprüche 1 bis 6, wobei Blei zu einem Anteil von unter 0,001 Gewichtsprozent vorhanden ist.

8. Verfahren zur Herstellung einer LTCC-Keramikmasse nach einem der Ansprüche 1 bis 7, wobei an einer Oberfläche zumindest einer der Keramikmaterialien (2, 3) eine Beschichtung (7) mit dem Glasmaterial (4) erzeugt wird.

9. Verfahren nach Anspruch 8, wobei ein Keramikpulver des Keramikmaterials und als Oberfläche die Pulveroberfläche (6) des Keramikpulvers (5) verwendet werden.

10. Verfahren nach Anspruch 8 oder 9, wobei ein Glasmaterial (4) mit nanometerskaligen Glaspartikeln (9) verwendet wird.

11. Verfahren nach einem der Ansprüche 8 bis 10, wobei folgende Verfahrensschritte durchgeführt werden:
a) Erzeugen eines Gemenges (11) aus dem Keramikmaterial (2, 3, 5) und dem Glasmaterial (4, 9) und
b) Mahlen des Gemenges (11)

12. Verfahren nach einem der Ansprüche 8 bis 10, wobei eine Lösungsbeschichtung durchgeführt wird.

13. Verfahren nach Anspruch 12, wobei bei der Lösungsbeschichtung ein Sol-Gel-Verfahren durchgeführt wird.

14. Verwendung der LTCC-Keramikmasse nach einem der Ansprüche 1 bis 7 zum Herstellen eines keramischen Grünkörpers (8).

## Claims

1. LTCC ceramic mass (1, 11, 12, 13, 14), having
- a ceramic material (2),
- at least one further ceramic material (3), which is different from the ceramic material (2), and
- at least one glass material (4) arranged between the ceramic materials (2, 3),
**characterized in that**
- the LTCC ceramic mass has a sintering temperature of below 950°C, and
- lead is present in an amount of less than 0.1% by weight.

2. LTCC ceramic mass according to Claim 1, in which at least one of the ceramic materials (2, 3) includes a ceramic powder (5) with a powder surface (6) at which the glass material (4) is arranged.

3. LTCC ceramic mass according to Claim 2, in which the glass material (4) is a homogeneous coating (7) of the powder surface (6).

4. LTCC ceramic mass according to one of Claims 1 to 3, in which the ceramic material (2) and the further ceramic material (3) include at least one identical chemical element, and the proportion of the element in the ceramic material (2) and the proportion of the element in the further ceramic material (3) differ.

5. LTCC ceramic mass according to one of Claims 1 to 4, in which the LTCC ceramic mass (1, 11, 12, 13, 14) has a temperature dependency of a relative permittivity, which is lower within a defined temperature range than a temperature dependency of a relative permittivity of one of the ceramic materials (2, 3) in the temperature range.

6. LTCC ceramic mass according to one of Claims 1 to 5, in which the ceramic material (2) and/or the further ceramic material (3) includes at least one substance which is selected from the group consisting of Ba₁-ᵤSrᵤTiO₃ and/or BaZrₓTi₁₋ₓO₃, with u and x selected from a range from zero to one inclusive.

7. LTCC ceramic mass according to one of Claims 1 to 6, in which lead is present in an amount of less than 0.001% by weight.

8. Method for producing the LTCC ceramic mass according to one of Claims 1 to 7, in which a coating (7) which includes the glass material (4) is produced at a surface of at least one of the ceramic materials (2, 3).

9. Method according to Claim 8, in which a ceramic powder of the ceramic material and, as the surface, the powder surface (6) of the ceramic powder (5) are used.

10. Method according to Claim 8 or 9, in which a glass material (4) with nanometre-scale glass particles (9) is used.

11. Method according to one of Claims 8 to 10, in which the following method steps are carried out:
a) production of a batch (11) comprising the ceramic material (2, 3, 5) and the glass material (4, 9), and
b) milling the batch (11).

12. Method according to one of Claims 8 to 10, in which solution coating is carried out.

13. Method according to Claim 12, in which a sol-gel process is carried out during the solution coating.

14. Use of the LTCC ceramic mass according to one of Claims 1 to 7 for the production of a green ceramic product (8).

## Revendications

1. Masse céramique LTCC (1, 11, 12, 13, 14) comprenant
- un matériau céramique (2),
- au moins un autre matériau céramique (3) différent du matériau céramique (2) et
- au moins un matériau vitreux (4) disposé entre les matériaux céramique (2,3)
**caractérisé en ce que**
- la masse céramique LTCC présente une température de frittage inférieure à 950°C et
- du plomb est présent pour une fraction inférieure à 0,1 % en poids.

2. Masse céramique LTCC selon la revendication 1, au moins un des matériaux céramique (2, 3) présentant une poudre de céramique (5) avec une surface de poudre (6) sur laquelle est disposé le matériau vitreux (4).

3. Masse céramique LTCC selon la revendication 2, le matériau céramique (4) étant un revêtement (7) homogène de la surface de poudre (6).

4. Masse céramique LTCC selon l'une quelconque des revendications 1 à 3, le matériau céramique (2) et l'autre matériau céramique (3) présentant au moins un élément chimique identique et une fraction de l'élément dans le matériau céramique (2) et une fraction de l'élément dans l'autre matériau céramique (3) étant différentes.

5. Masse céramique LTCC selon l'une quelconque des revendications 1 à 4, la masse céramique LTCC (1, 11, 12, 13, 14) présentant une dépendance en température d'une permittivité relative, qui est inférieure dans une plage de températures définie à une dépendance en température d'une permittivité relative de l'un des matériaux céramique (2, 3) dans la plage de températures.

6. Masse céramique LTCC selon l'une quelconque des revendications 1 à 5, le matériau céramique (2) et/ou l'autre matériau céramique (3) présentant au moins une matière qui est choisie dans le groupe Ba₁-ᵤSrᵤTiO₃ et/ou BaZrₓTi₁₋ₓO₃ avec u et x étant choisis dans une plage de 0 inclus à 1 inclus.

7. Masse céramique LTCC selon l'une quelconque des revendications 1 à 6, du plomb étant présent pour une fraction inférieure à 0,001 % en poids.

8. Procédé pour la fabrication d'une masse céramique LTCC selon l'une quelconque des revendications 1 à 7, un revêtement (7) avec le matériau vitreux (4) étant généré sur une surface d'au moins l'un des matériaux céramique (2, 3).

9. Procédé selon la revendication 8, une poudre de céramique du matériau céramique et comme surface la surface de poudre (6) de la poudre de céramique (5) étant utilisées.

10. Procédé selon la revendication 8 ou 9, un matériau vitreux (4) avec des particules de verre (9) de l'ordre du nanomètre étant utilisé.

11. Procédé selon l'une quelconque des revendications 8 à 10, les étapes de procédé suivantes étant effectuées :
a) production d'un mélange (11) à base du matériau céramique (2, 3, 5) et du matériau vitreux (4, 9) et
b) broyage du mélange (11 )

12. Procédé selon l'une quelconque des revendications 8 à 10, un revêtement de solution étant effectué.

13. Procédé selon la revendication 12, un procédé sol-gel étant effectué pour le revêtement de solution.

14. Utilisation de la masse céramique LTCC selon l'une quelconque des revendications 1 à 7 pour la fabrication d'un corps vert (8) céramique.
